# EUROPÄISCHE PATENTSCHRIFT

(11) **EP 2 143 582 B1**
(45) Veröffentlichungstag und Bekanntmachung des Hinweises auf die Patenterteilung: **21.01.2015**
(21) Anmeldenummer: 09164774.3
(22) Anmeldetag: 07.07.2009
(51) Int. Cl.: B60J 7/22

(54) **Windstopeinrichtung**
Wind protection element
Elément de protection contre le vent

(30) Priorität: 11.07.2008 DE 102008033520
(43) Veröffentlichungstag der Anmeldung: 13.01.2010
(73) Patentinhaber: Scambia Holdings Cyprus Limited, 3106 Limassol (CY)
(72) Erfinder: Götz, Matthias, 71706, Markgröningen (DE); Riehle, Jörg, 71679, Asperg (DE)
(74) Vertreter: Hoeger, Stellrecht & Partner Patentanwälte

(56) Entgegenhaltungen:
- DE-A1- 19 502 793
- DE-A1- 19 710 079
- GB-A- 2 161 194
- NL-C2- 1 023 764
- US-A1- 2007 042 833
- US-B1- 6 279 999

## Beschreibung

Die Erfindung betrifft eine Windstopeinrichtung für ein Cabriofahrzeug umfassend ein Flachmaterial und einen das Flachmaterial aufnehmenden sowie in einer Aufspannfläche gespannt haltenden Rahmen.

Eine derartige Windstopeinrichtung ist aus der DE 195 02 793 A1 bekannt, wobei bei diesem jeweils das Flachmaterial in einem in der Aufspannfläche gespannten und faltenfreien Zustand an dem Rahmen fixiert werden muss.

Dies erfordert es, dass das Flachmaterial bei der Montage an dem Rahmen oder bei der Verbindung mit dem Rahmen durch geeignete Vorrichtungen gespannt gehalten werden muss, wodurch die Montage des Flachmaterials an dem Rahmen aufwendig ist.

Aus der GB 2 161 194 A oder der DE 197 10 079 A1 sind außerdem perforierte Folien zum Insektenschutz bekannt, die beispielsweise an einem Fensterrahmen fixierbar sind und als Schrumpffolien ausgebildet sind.

Der Erfindung liegt die Aufgabe zugrunde, eine Windstopeinrichtung für ein Cabriofahrzeug der gattungsgemäßen Art derart zu verbessern, dass diese möglichst einfach herstellbar ist, wobei insbesondere das Flachmaterial möglichst einfach an dem Rahmen fixierbar sein soll.

Diese Aufgabe wird bei einer Windstopeinrichtung erfindungsgemäß dadurch gelöst, dass das Flachmaterial aus einem durch Erwärmen auf eine über einer Einsatztemperatur liegende Wandlungstemperatur sich in der Aufspannfläche unter Spannung setzenden Flachmaterial aus Fasern mit einer Faserstruktur gebildet ist, welche beim Erwärmen auf die Wandlungstemperatur in mindestens einer in der Aufspannfläche liegenden Ausdehnungsrichtung selbsttätig die Spannung erzeugt, und dass das Flachmaterial ein Gewebe, Gestricke oder Gewirke aus diesen Fasern ist.

Der Vorteil der erfindungsgemäßen Lösung ist darin zu sehen, dass mit dieser die Montage des Flachmaterials an dem Rahmen weit einfacher erfolgen kann, da nach einer Montage des Flachmaterials an dem Rahmen die Möglichkeit besteht, dies durch ein Erwärmen auf die Wandlungstemperatur in einen unter Spannung stehenden Zustand zu setzen, so dass sich das Flachmaterial selbstständig in dem Rahmen spannt und Faltenwurf sowie ein Durchhängen desselben in dem Rahmen ausgleicht und bei nachfolgendem Abkühlen auf die Einsetztemperatur diesen Zustand aufrecht erhält.

Dies führt zu einer signifikanten Vereinfachung der Montage des Flach-materials an dem Rahmen.

Der Vorteil der erfindungsgemäßen Lösung ist außerdem darin zu sehen, dass damit die Faserstruktur selbst bei Aufwärmen auf die Wandlungstemperatur die erforderliche Spannung erzeugt.

Eine Variante sieht vor, dass die Faserstruktur Fasern mit einem Faserverlauf aufweist, der sich beim Erwärmen auf die Wandlungstemperatur ändert. Beispielsweise sind bei einer derartigen Faserstruktur Fasern vorgesehen, die eine von einer geradlinigen Erstreckung der Faser abweichende Struktur, beispielsweise eine gekräuselte oder eine gefaltete oder eine in Schlingen oder Mäandern verlaufende Struktur aufweisen, wobei die Fasern bei einer Erwärmung auf die Wandlungstemperatur ihre Kräuselung oder ihre Faltung oder ihre Schlingen oder Mäander noch verstärkt ausprägen und dadurch in der Lage sind, in der Aufspannfläche das Flachmaterial unter Spannung zu setzen.

Besonders zweckmäßig ist es, wenn die Faserstruktur so ausgebildet ist, dass diese in mindestens zwei in der Aufspannfläche liegenden und quer zueinander verlaufenden Ausdehnungsrichtungen eine Spannung erzeugt.

Alternativ oder ergänzend zur Ausbildung des Flachmaterials aus einer Faserstruktur, die sich beim Erwärmen auf die Wandlungstemperatur ändert und dadurch die Spannung in der Aufspannfläche erzeugt, ist es ebenfalls denkbar, das Flachmaterial aus Fasern auszubilden, welche aus einem vorgedehnten Material sind, das sich beim Erwärmen auf die Wandlungstemperatur kontrahiert, das heißt, dass sich in diesem Fall die tatsächliche Länge der Faser verkürzt, um die Spannung in der Aufspannfläche zu erzeugen.

Als besonders vorteilhaft hat es sich erwiesen, wenn das Flachmaterial aus einem Gewirke aus Fasern hergestellt ist, da bei einem derartigen Gewirke insbesondere Fasern mit einer sich ändernden Faserstruktur vorteilhaft einsetzbar sind.

Um ferner das Flachmaterial dauerhaft in dem Rahmen gespannt halten zu können, ist vorzugsweise vorgesehen, dass das Flachmaterial in mindestens einer in der Aufspannfläche liegenden Ausdehnungsrichtung elastisch dehnbar ist.

Eine derartige elastische Dehnbarkeit ist vorzugsweise sowohl vor dem Aufwärmen auf die Wandlungstemperatur als auch nach dem Aufwärmen auf die Wandlungstemperatur gegeben, so dass insbesondere das nach dem Aufwärmen auf die Wandlungstemperatur unter Spannung gesetzte Flachmaterial diese Spannung während der Lebenszeit des Schutzelements aufrecht erhält.

Hinsichtlich der Art des Flachmaterials wurden im Zusammenhang mit der bisherigen Erläuterung der einzelnen Ausführungsbeispiele keine näheren Angaben gemacht. So sieht eine vorteilhafte Ausführungsform vor, dass das Flachmaterial ein biegeschlaffes Flachmaterial ist, welches sich insbesondere in beliebig ausgebildeten Aufspannflächen anordnen lässt.

Vorzugsweise ist ferner vorgesehen, dass das Flachmaterial aus einem sich von dem Material des Rahmens unterscheidenden Material hergestellt ist, so dass sich der Rahmen in bekannter einfacher Art und Weise entweder aus Metall oder aus Kunststoff, insbesondere als Spritzgussteil, unabhängig vom Flachmaterial herstellen lässt und nachfolgend eine Verbindung zwischen dem Rahmen und dem Flachmaterial erfolgt.

Hinsichtlich der Befestigung des Flachmaterials an dem Rahmen wurden bislang keine näheren Angaben gemacht.

So ist vorzugsweise vorgesehen, dass das Flachmaterial in einer Aufnahme des Rahmens durch eine kraftschlüssige Verbindung gehalten ist.

Beispielsweise sieht eine derartige kraftschlüssige Verbindung eine Klemmverbindung zwischen dem Flachmaterial und dem Rahmen vor.

Eine bevorzugte Ausführung sieht dabei vor, dass der Rahmen eine Aufnahme aufweist, in welcher das Flachmaterial durch einen Keder geklemmt gehalten ist.

Eine ergänzende oder alternative Ausführungsform sieht vor, dass das Flachmaterial durch eine formschlüssige Verbindung in einer Aufnahme des Rahmens gehalten ist.

Eine derartige formschlüssige Verbindung kann beispielsweise so ausgeführt sein, dass der Rahmen an Formschlussenden des Flachmaterials angreifende Formschlusselemente, wie beispielsweise Vorsprünge oder Zapfen aufweist.

Eine weitere vorteilhafte Lösung sieht vor, dass der Rahmen an einen Randbereich des Flachmaterials angeformt ist.

In diesem Fall ist eine besonders einfache Art der Herstellung des Rahmens möglich, nämlich dadurch, dass der Rahmen entweder teilweise oder als Ganzes an einen Randbereich des Flachmaterials angespritzt oder angeschweißt ist, so dass eine stoffschlüssige Verbindung zwischen dem Randbereich des Flachmaterials und dem Rahmen, und zwar während der Herstellung des Rahmens, entsteht, die einen sehr einfachen Herstellungsprozess des Rahmens erlaubt, und sich insbesondere dadurch dass die erfindungsgemäße Windstopeinrichtung einfach herstellen lässt, da bei diesem Anspritzen des Rahmens an den Randbereich des Flachmaterials das Flachmaterial nicht gespannt gehalten werden muss, sondern lose in die Spritzgussform hineinragen kann, wobei erfindungsgemäß dann das Spannen des Flachmaterials nach Herstellung des Rahmens erfolgt, so dass sich das gespannte Flachmaterial an die nach Herstellung des Rahmens sich verändernde Form, beispielsweise durch Schrumpfen verändernde Form, desselben anpasst.

Darüber hinaus betrifft die Erfindung ein Verfahren zum Herstellen einer Windstopeinrichtung für ein Cabriofahrzeug aus einem Flachmaterial und einem das Flachmaterial in einer Aufspannfläche gespannt haltenden Rahmen.

Auch dem erfindungsgemäßen Verfahren liegt die eingangs genannte Aufgabe, nämlich eine möglichst einfache Herstellung einer derartigen Windstopeinrichtung, zugrunde.

Diese Aufgabe wird bei einem derartigen Verfahren erfindungsgemäß dadurch gelöst, dass das aus einem Gewebe, Gestricke oder Gewirke aus Fasern gebildete Flachmaterial spannungsfrei an den Rahmen fixiert wird und durch Erwärmen der Fasern auf eine über einer Einsatztemperatur liegende Wandlungstemperatur in dem Rahmen unter Spannung gesetzt wird.

Der Vorteil dieses erfindungsgemäßen Verfahrens ist derselbe, wie eingangs beschrieben, nämlich eine sehr einfache Möglichkeit zur Herstellung einer derartigen erfindungsgemäßen Windstopeinrichtung.

Insbesondere ist dabei vorgesehen, dass das Flachmaterial nach Erreichen einer Endform des Rahmens auf die Wandlungstemperatur erwärmt wird, so dass damit noch die Möglichkeit besteht, Formveränderungen des Rahmens, insbesondere eines durch Kunststoffspritzen hergestellten Rahmens, bei dem unter Spannung setzen des Flachmaterials mit auszugleichen.

Die Erwärmung des Flachmaterials kann auf unterschiedlichste Art und Weise erfolgen.

Eine vorteilhafte Lösung sieht vor, dass das Flachmaterial durch ein warmes Medium auf die Wandlungstemperatur erwärmt. Ein derartiges warmes Medium könnte beispielsweise eine Flüssigkeit, ein Dampf oder ein Gas sein.

Beispielsweise ist es denkbar, beispielsweise einen Dampf einzusetzen.

Alternativ dazu ist vorzugsweise vorgesehen, dass das Flachmaterial durch Strahlung, insbesondere Wärmestrahlung auf die Wandlungstemperatur erwärmt wird.

Um thermische Ausdehnungen des Rahmens beim Erwärmen des Flachmaterials auf die Wandlungstemperatur weitgehend zu vermeiden ist vorzugsweise vorgesehen, dass das Flachmaterial durch eine auf dieses und nicht auf den Rahmen gerichtete Erwärmung auf die Wandlungstemperatur erwärmt wird.

Hierunter ist insbesondere jeder Prozess zu verstehen, der zu einer unmittelbaren Erwärmung des Flachmaterials führt, jedoch nicht zu einer unmittelbaren Erwärmung des Rahmens, so dass beispielsweise im Fall eines warmen Mediums das Medium unmittelbar auf das Flachmaterial und nicht auf den Rahmen gerichtet wird und in gleicher Weise auch die Strahlung hierbei unmittelbar auf das Flachmaterial und nicht auf den Rahmen gerichtet wird.

Um die Erwärmung des Rahmens möglichst gering zu halten, ist es besonders vorteilhaft, wenn der Rahmen beim Erwärmen des Flachmaterials auf die Wandlungstemperatur abgeschirmt wird.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Figur 1: eine Seitenansicht einer Karosserie eines Kraftfahrzeugs mit einem erfindungsgemäßen Windschutzelement;
- Figur 2: eine ausschnittsweise perspektivische Darstellung des Windschutzelements gemäß Figur 1 montiert an der Karosserie des Kraftfahrzeugs,
- Figur 3: einen Querschnitt durch einen der Rahmen des ersten Ausführungsbeispiels des erfindungsgemäßen Windschutzelements mit Fixierung eines von dem jeweiligen Rahmen aufgespannten Flachmaterials;
- Figur 4: eine perspektivische Draufsicht auf ein zweites Ausführungsbeispiels eines erfindungsgemäßen Wind-, Sicht- oder Lichtschutzelements;
- Figur 5: einen Schnitt längs Linie 5-5 bei dem zweiten Ausführungsbeispiel;
- Figur 6: einen Schnitt ähnlich Figur 5 durch ein drittes Ausführungsbeispiel eines erfindungsgemäßen Wind-, Sicht- oder Lichtschutzelements;
- Figur 7: eine ausschnittsweise Darstellung einer Draufsicht auf eine Ausführungsform eines erfindungsgemäßen Flachmaterials;
- Figur 8: eine schematische Darstellung einer Faserstruktur im Flachmaterial vor einer Erwärmung auf eine Wandlungstemperatur;
- Figur 9: eine schematische Darstellung der Faserstruktur nach der Erwärmung auf die Wandlungstemperatur;
- Figur 10: eine schematische Darstellung einer gedehnten Faser vor einer Erwärmung auf die Wandlungstemperatur;
- Figur 11: eine schematische Darstellung der gedehnten Faser nach einer Erwärmung auf die Wandlungstemperatur; und
- Figur 12: eine schematische Darstellung einer Erwärmung des erfindungsgemäßen Flachmaterials in dem Rahmen 100'.

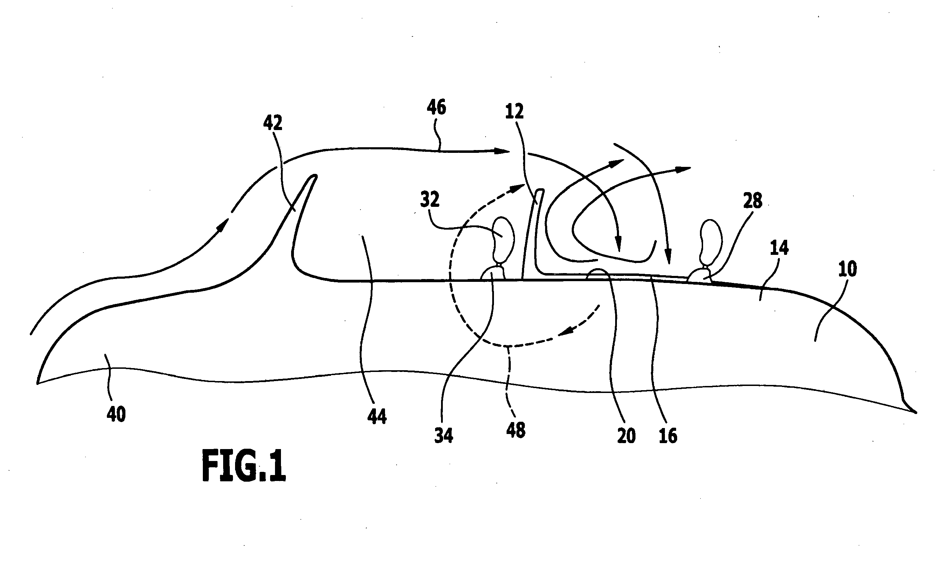

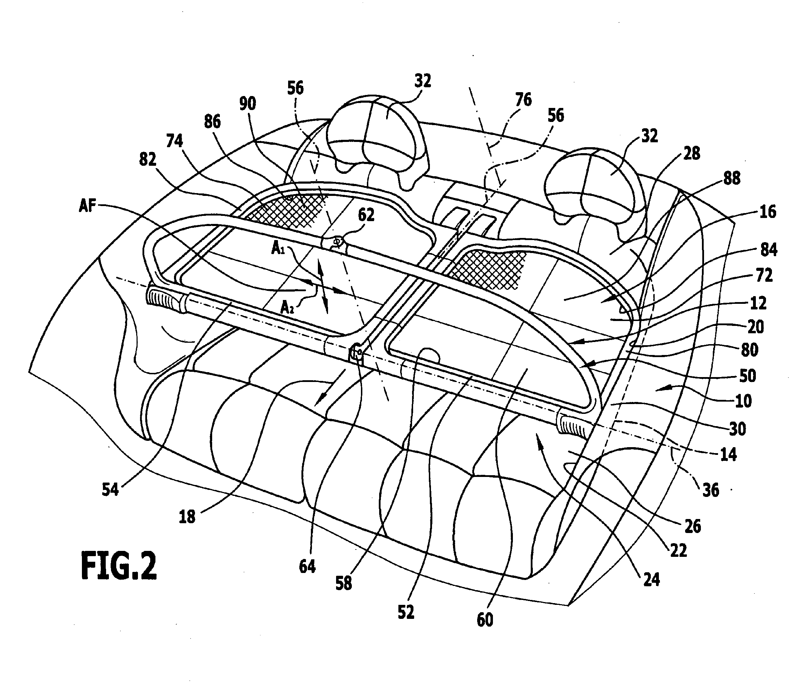

Ein in Figur 1 und 2 dargestelltes erstes Ausführungsbeispiel eines erfindungsgemäßen Windschutzelement für Kraftfahrzeuge, ausgebildet als Windstopeinrichtung für ein Cabrio-Fahrzeug, dessen Karosserie 10 in Figur 1 und 2 ausschnittsweise dargestellt ist, umfasst ein Windschott 12, welches über eine Gürtellinie 14 der Karosserie 10 des Kraftfahrzeugs nach oben übersteht, sowie eine Abdeckung 16, welche bezogen auf eine Fahrtrichtung 18 einen hinter dem Windschott 12 liegenden Teilbereich 20 einer ungefähr in Höhe der Gürtellinie 14 angeordneten Fahrgastraumöffnung 22 abdeckt. Beispielsweise liegt der Teilbereich 20 der Fahrgastraumöffnung 22 über einer Rücksitzanlage 24, welche eine Sitzbank 26 sowie eine Rücksitzlehne 28 aufweist.

Vorzugsweise schließt dabei der Teilbereich 20 der Fahrgastraumöffnung 22 unmittelbar an der Rücksitzlehne 28 an und erstreckt sich in der Fahrtrichtung 18 bis zum Windschott 12 ebenfalls unter Anschluss an Karosserieseitenwände 30 im Bereich der Gürtellinie 14.

Zweckmäßigerweise sitzt dabei das Windschott 12 so, dass dieses im Wesentlichen unmittelbar hinter zeichnerisch in Figur 2 nicht dargestellten Kopfstützen 32 von Vordersitzen 34 des Kraftfahrzeugs angeordnet ist.

Die Abdeckung 16 ist mit dem Windschott 12 vorzugsweise gelenkig, beispielsweise um eine Klappachse 36 verschwenkbar, verbunden und beide gemeinsam sind über zeichnerisch nicht im einzelnen dargestellte Fixiereinrichtungen, die entweder am Windschott 12 oder an der Abdeckung 16 angeordnet sind, im Bereich der Gürtellinie 14 an der Karosserie 10, beispielsweise im Bereich der Seitenwände 30, fixierbar.

Zusätzlich ist vorteilhafterweise noch eine Fixiereinrichtung für die Abdeckung 16 im Bereich der Rücksitzanlage 24 vorgesehen.

Wie in Figur 1 dargestellt, hat bei einem Cabrio-Fahrzeug die von einer Frontseite 40 und einer Windschutzscheibe 42 über einen vorderen, hinter der Windschutzscheibe 42 liegenden Fahrgastraumbereich 44 angehobene Luftströmung 40 die Tendenz über den vorderen Fahrgastraumbereich 44 und das Windschott 12 hinwegzuströmen, sich jedoch nach dem Windschott 12 in Richtung der Karosserie 10 abzusenken. Dies würde bei einer für die Luftströmung 46 durchlässigen Abdeckung 16 zur Folge haben, dass die Luftströmung 46 die Abdeckung 16 durchsetzen würde, und, wie gestrichelt als Luftströmung 48 dargestellt, von der Rücksitzanlage 24 in Richtung des Fahrgastraumbereichs 44 strömen und dann aus diesem wieder über das Windschott 12 hinwegströmen würde, so dass die bereits erwähnten Zugerscheinungen im Fahrgastraumbereich 44 auftreten würden.

Andererseits hätte ein komplett luftundurchlässiger Verschluss im Bereich des Windschotts 12 sowie der Abdeckung 16 zur Folge, dass im Fahrgastraumbereich 44 zwischen der Frontscheibe und dem Windschott 12 aufgrund der Strömung 46 ein Unterdruck entstehen würde, der wiederum zu einen Eintreten von Luft aus der Umgebung in den Fahrgastraum 44, insbesondere im seitlichen Bereich zwischen der Windschutzscheibe 42 und dem Windschott 12, führen würde, so dass mindestens in seitlichen Außenbereichen des Fahrgastraumbereichs 44 ebenfalls die unerwünschten Zugerscheinungen durch Luftströmungen auftreten würden.

Aus diesem Grund sind sowohl das Windschott 12 sowie die Abdeckung 16 teilweise luftdurchlässig, und zwar derart, dass die Luftdurchlässigkeit des Windschotts 12 größer ist als die Luftdurchlässigkeit der Abdeckung 16.

Vorzugsweise hat die Abdeckung 16 eine Luftdurchlässigkeit, die größer Null ist, um die Ausbildung eines Unterdrucks im Fahrgastraumbereich 44 zu verhindern und das Windschott 12 hat eine Luftdurchlässigkeit, die mindestens das Doppelte der Luftdurchlässigkeit der Abdeckung 16 beträgt.

Damit werden einerseits Luftströmungen im Fahrgastraumbereich 44 zwischen der Windschutzscheibe 42 und dem Windschott 12 weitgehend unterdrückt, andererseits wird die bereits beschriebene Bildung eines Unterdrucks im Fahrgastraumbereich 44 vermieden.

Das Windschott 12 ist aus einem Windschottrahmen 50 gebildet, welcher zwei Rahmenteile 52 und 54 umfasst, die um eine Schwenkachse 56, welche beispielsweise eine Mittelachse des Windschottrahmens 50 darstellt, relativ zueinander verschwenkbar sind und somit von einer aufgeklappten Funktionsstellung, in welcher sich der Windschottrahmen 50 mit maximaler Ausdehnung quer zur Fahrtrichtung 18 in Richtung seiner Rahmenfläche erstreckt, in eine Klappstellung bringbar sind, in welcher die Rahmenteile 52, 54 ungefähr aufeinander liegen.

Die beiden Rahmenteile 52 und 54 umschließen gemeinsam eine Rahmenöffnung 58, welche durch einen Windschottrahmeneinsatz 60 in Form eines Flachmaterials F verschlossen ist, der bei aufgeklappten und somit in der Funktionsstellung stehenden Rahmenteilen 52, 54 die Rahmenöffnung 58 des Windschottrahmens 50 übergreift.

Das Flachmaterial F erstreckt sich in einer Aufspannfläche AF in Ausdehnungsrichtungen A1 und A2 und ist dabei luftdurchlässig, jedoch so ausgebildet, dass es - wie bereits beschrieben - eine schnelle Luftströmung blockiert.

Vorzugsweise sind die Rahmenteile 52, 54 so ausgebildet, dass diese über Scharniere 62, 64 miteinander verbunden sind und sich jeweils C-förmig beiderseits der Schwenkachse 56 erstrecken, so dass in der Funktionsstellung die Rahmenöffnung 58 insgesamt von den C-förmigen Rahmenteilen 52, 54 umschlossen und somit insbesondere im Bereich der Schwenkachse 56 nicht durch Streben geteilt ist.

Die Abdeckung 16 ist ebenfalls aus zwei Abdeckungsteilen 72, 74 gebildet, die im Bereich einer Trennebene 76, in welcher auch die Schwenkachse 56 liegt, voneinander getrennt sind.

Darüber hinaus sind die beiden Abdeckungsteile 72 und 74 oder nur eines derselben gelenkig zum Beispiel um die Klappachse 32 schwenkbar, mit dem Windschott 12 verbunden, um die gesamte Windstopeinrichtung zusammenfalten zu können.

Bei einer Variante der erfindungsgemäßen Windstopeinrichtung erfolgt eine Faltung gemäß der DE 195 45 405, auf welche diesbezüglich vollinhaltlich Bezug genommen wird, wobei bei dieser Art der Faltung beide Abdeckungsteile 72 und 74 gelenkig mit dem Windschott 12, und zwar jeweils mit einem der Rahmenteile 52, 54, verbunden sind, so dass beim Falten derselben ein Schwenken um die Schwenkachse 56 und Zusammenklappen der Rahmenteile 52 und 54 sowie der Abdeckungsteile 72 und 74 erfolgt, und zwar derart, dass die Rahmenteile 52, 54 aufeinander und zwischen den Abdeckungsteilen 72, 74 liegen.

Eine andere Lösung für das Zusammenklappen ist in der DE 100 53 701 A1 beschrieben, auf welche diesbezüglich ebenfalls vollinhaltlich Bezug genommen wird. Bei dieser Lösung sind die Abdeckungsteile 72 und 74 gelenkig miteinander verbunden, jedoch nur eines der Abdeckungsteile 72 oder 74 ist ständig mit einem der Rahmenteile 52 bzw. 54 gelenkig verbunden, so dass jeweils die Abdeckungsteile 72 und 74 und die Rahmenteile 52 und 54 relativ zueinander zusammengeklappt werden können und dann insgesamt die zusammengeklappten Rahmenteile 52, 54 sowie die zusammengeklappten Abdeckungsteile 72, 74 durch Schwenken um die Klappachse 32 zwischen einem der Abdeckungsteile 72, 74 und einem der Rahmenteile 52, 54 aufeinander gelegt werden können.

In Figur 1 dargestellt, umfasst jedes der Abdeckungsteile 72 und 74 einen Abdeckungsrahmen 80, 82, der an der Karosserie 10 in der beschriebenen Art und Weise fixierbar ist.

Jeder Abdeckungsrahmen 80, 82 umschließt eine Öffnung 84, 86, welche durch einen Abdeckungsrahmeneinsatz 88, 90 in Form eines sich in einer Aufspannfläche AF erstreckenden Flachmaterials F verschlossen ist.

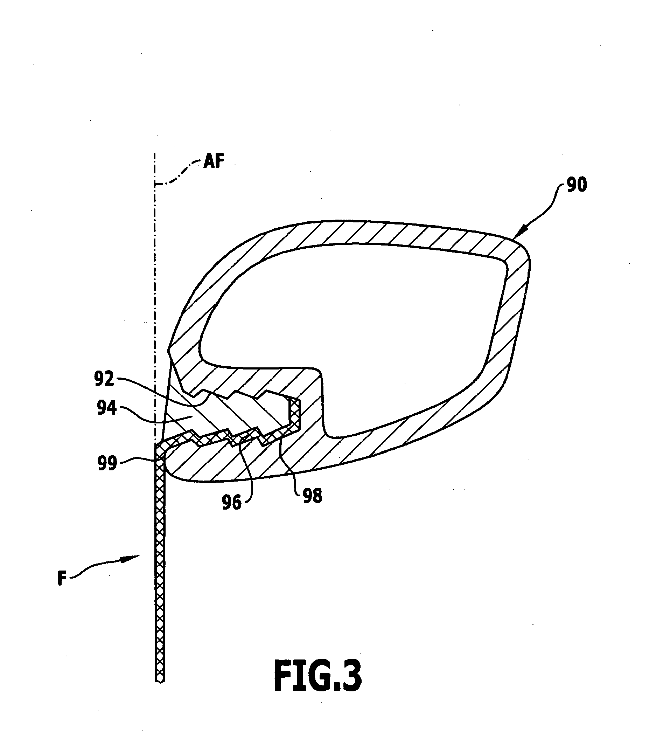

Zur Fixierung des Flachmaterials F an den Rahmenteilen 52 oder 54 des Windschottrahmens 50 oder an den Abdeckungsrahmen 80 und 82 ist, wie in Figur 3 dargestellt, ein Rahmenrohr 90 mit einer Ausnehmung 92 versehen, in welche ein Keder 94 durch eindrücken einsetzbar und fixierbar ist.

Das Fixieren erfolgt dabei dadurch, dass ein Randbereich 96 des Flachmaterials F mit dem Keder 94 mit in die Ausnehmung eingedrückt wird und durch den Keder 94 zwischen diesem und einer die Ausnehmung 92 begrenzenden Wand 98 durch Einklemmen fixiert wird, so dass das Flachmaterial F durch einen Rand 99 der Ausnehmung 92 in der Aufspannfläche AF gehalten wird.

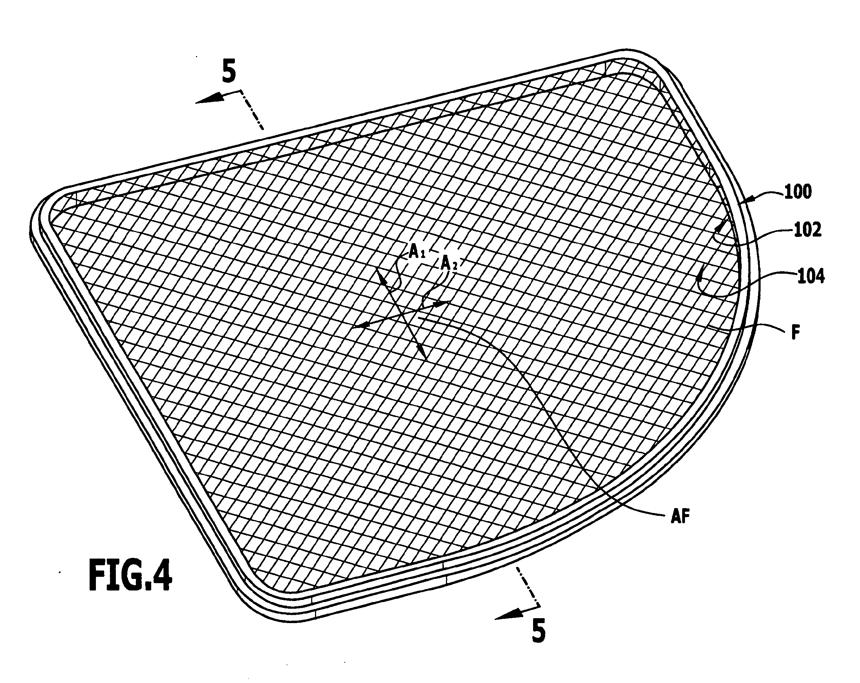

Ein zweites Ausführungsbeispiel eines erfindungsgemäßen Wind- Sicht- oder Lichtschutzelements für Kraftfahrzeuge, dargestellt in Figur 4, umfasst einen Rahmen 100, der eine Rahmenöffnung 102 umschließt, wobei die Rahmenöffnung 102 durch einen Rahmeneinsatz 104 in Form eines Flachmaterials F verschlossen ist.

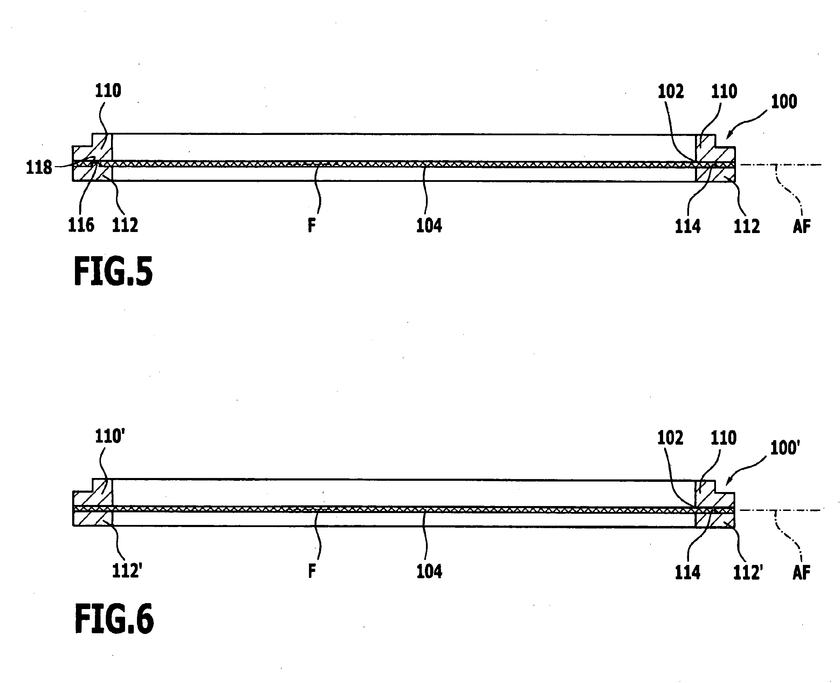

Wie in Figur 5 dargestellt, erstreckt sich das den Rahmeneinsatz 104 bildende Flachmaterial F in der Aufspannfläche AF und ist zwischen zwei den Rahmen 100 bildenden Rahmenteilen 110, 112 dadurch gehalten, dass sich das Flachmaterial in der Aufspannfläche AF mit einem Randbereich 114 über die Rahmenöffnung 102 hinaus zwischen den Rahmenteilen 110 und 112 erstreckt und somit zwischen den Rahmenteilen 110 und 112 gehalten ist.

Dabei kann ist beispielsweise, wie in Figur 5 dargestellt, eines der Rahmenteile 110 oder 112 mit einem Formschlusselement 116 in Form eines Vorsprungs versehen, welcher in eine Ausnehmung 118 im Randbereich 114 eingreift.

Alternativ oder ergänzend dazu ist, wie in Figur 6 dargestellt, vorgesehen, dass die Rahmenteile 110' und 112' an die Randbereiche 114 angespritzt sind, das heißt, im Verlauf eines Spritzprozesses angeformt sind, so dass eine stoffschlüssige Verbindung zwischen den mindestens einem der Rahmenteile 110 oder 112 und dem Randbereich 114 vorliegt, wozu der Randbereich 114 in eine zum Herstellen der Rahmenteile 110' und 112' vorgesehene Spritzgussform einzulegen ist.

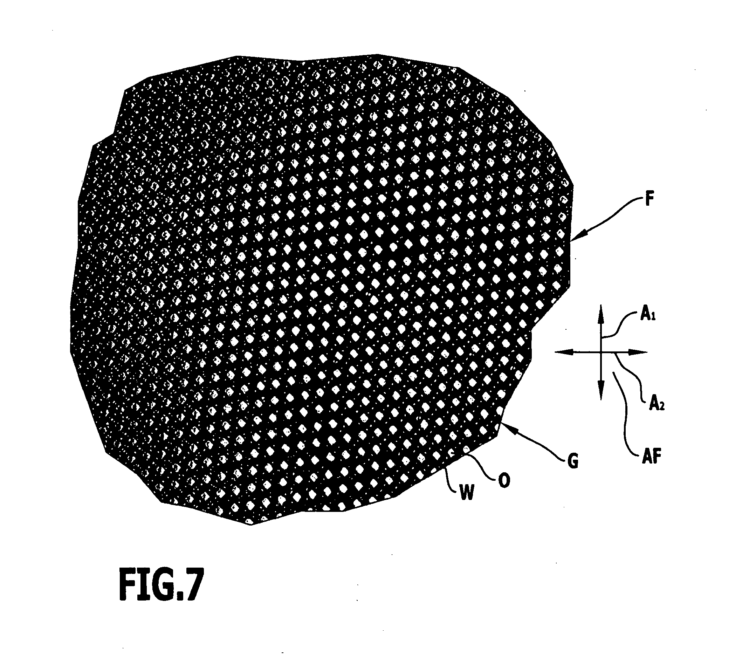

Das Flachmaterial F ist nun so ausgebildet, dass dieses beispielsweise, wie in Figur 7 dargestellt, ein Gewirke G bildet, das in Draufsicht gewirkte Bereiche W sowie zwischen den gewirkten Bereichen W liegende Öffnungen O zeigt, die jeweils von den gewirkten Bereichen W umschlossen sind.

Durch das Verhältnis der gewirkten Bereiche W zu den Öffnungen O lässt sich dabei die Luftdurchlässigkeit des Flachmaterials einstellen und somit auch eine relative Luftdurchlässigkeit von unterschiedlichem Flachmaterial F für das Windschott 12 oder die Abdeckung 16 herstellen.

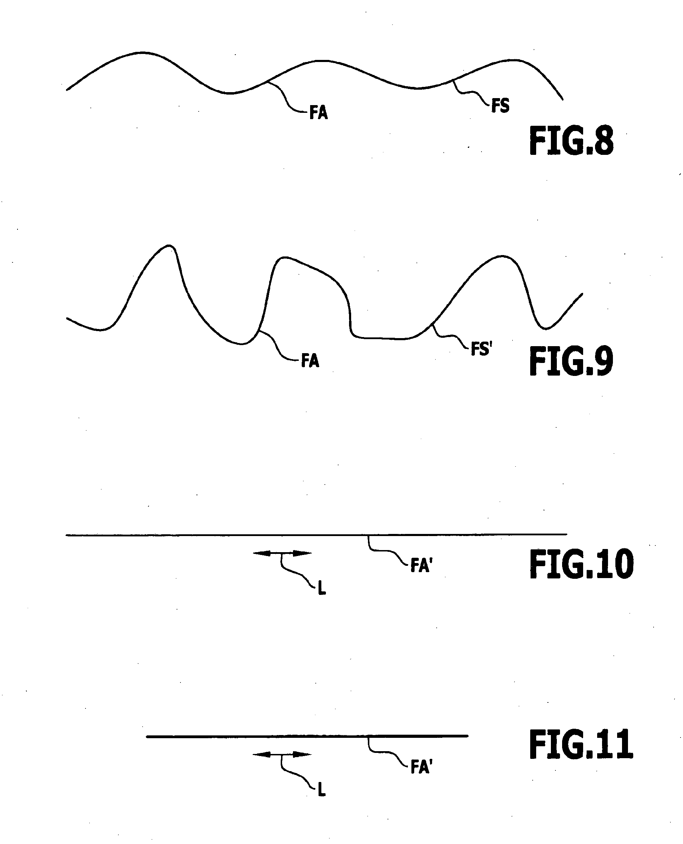

In den gewirkten Bereichen W sind einzelne gewirkte Fasern FA so mit einer Faserstruktur FS gewirkt, dass, wie beispielsweise in Figur 8 dargestellt, die einzelne Fasern FA zwar eine von einem geraden Verlauf abweichende Form haben, jedoch insgesamt gestreckt sind.

Durch Aufwärmen des Flachmaterials F über eine Wandlungstemperatur lässt sich jedoch erreichen, dass die Fasern FA in eine in Figur 9 dargestellte Faserstruktur FS' übergehen, in welcher sich das Flachmaterial F in beiden Ausdehnungsrichtungen A1 und A2 der jeweiligen Aufspannfläche AF durch eine Änderung der Faserstruktur FS in die Faserstruktur FS' in der jeweiligen Aufspannfläche AF spannen lässt, wobei beispielsweise durch Erwärmen über die Wandlungstemperatur die Fasern die Faserstruktur FS' einnehmen, die eine stärkere Abweichung von einem gerade gerichteten Verlauf der Fasern FA zeigt und somit insgesamt bei jeder der Fasern FA die Faserstruktur FS' in einer oder beiden der Ausdehnungsrichtungen A1 oder A2 verkürzt, wobei die Fasern FA selbst nicht verkürzt werden, sondern lediglich deren Abweichung von einem gerade gerichteten oder gestreckten Verlauf verstärkt wird, um dadurch die Spannung in den Ausdehnungsrichtungen A1 und A2 der Ausdehnungsfläche AF zu erzeugen.

Alternativ oder ergänzend dazu ist es ebenfalls denkbar, wie in Figur 10 dargestellt, die Fasern FA' aus einem Material herzustellen, das aus vorgedehnten Fasern FA' besteht, die sich beim Erwärmen über die Wandlungstemperatur in ihrer Längsrichtung L zusammenziehen und dadurch ebenfalls bewirken, dass sich das Flachmaterial F in den Ausdehnungsrichtungen A1 und A2 beim Erwärmen über die Wandlungstemperatur kontrahiert.

Insgesamt besteht somit bei Verwendung des erfindungsgemäßen Flachmaterials F die Möglichkeit, bei Herstellung eines Wind- Licht- oder Sonnenschutzes umfassend einen Rahmen 50 oder 80 oder 82 oder 100 das Flachmaterial F in einem nicht gespannten Zustand an dem Rahmen 50, 80, 82 oder 100 zu fixieren, wobei das Flachmaterial F einerseits durchhängen kann oder teilweise sogar geringfügige Falten werfen kann.

Erst nach einer Fixierung des Flachmaterials F mit dem jeweiligen Randbereich 96 oder 114 erfolgt ein Erwärmen des Flachmaterials F über die Wandlungstemperatur und bei diesem Erwärmen über die Wandlungstemperatur erfolgt eine Kontraktion des Flachmaterials F in den beiden, die Aufspannfläche AF bestimmenden Ausdehnungsrichtungen A1 und A2, so dass dadurch ein Spannen des Flachmaterials F in diesen Ausdehnungsrichtungen A1 und A2 eintritt und somit wird in der Aufspannfläche AF ein Spannungszustand des Flachmaterials F erreicht, so dass sich dieses in der Aufspannfläche AF gespannt und zwar in beiden Ausdehnungsrichtungen A1 und A2 erstreckt, und dadurch geringfügiger Faltenwurf und ein Durchhängen des Flachmaterials ausgeglichen werden können.

Die erfindungsgemäße Lösung ist sowohl bei Rahmen aus Metall, die ihre Form nicht ändern, als auch bei Rahmen aus Kunststoff, die beispielsweise nach dem Kunststoffspritzen aufgrund des Schwundes ihre Form ändern, insbesondere die jeweilige Rahmenöffnung verkleinern, einsetzbar, da sich derartige thermische Änderungen des jeweiligen Rahmens und somit ein mehr oder weniger starkes Durchhängen des Flachmaterials F dadurch ausgleichen lassen, dass anschließend das Flachmaterial F über die Wandlungstemperatur erwärmt wird und damit in einen Spannungszustand übergeht, welcher bei ausreichend großem Schrumpfen des Flachmaterials bewirkt, dass sich das gespannte Flachmaterial dann der vorliegenden Form und Ausdehnung des jeweiligen Rahmens anpasst.

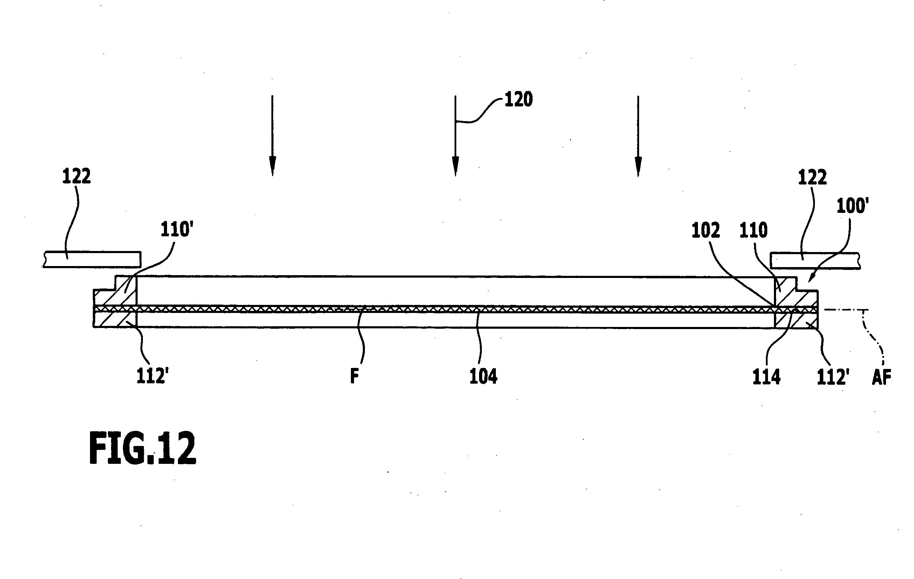

Um beim Erwärmen des Flachmaterials F den Rahmen möglichst nicht mitzuerwärmen, ist vorzugsweise, wie in Figur 12 dargestellt, vorgesehen, dass das Flachmaterial F entweder durch einen Strom 120 eines heißen Fluids oder durch Strahlung erwärmt wird, wobei sich sowohl das heiße Fluid als auch die Strahlung durch Abschirmungen 122 von dem jeweiligen Rahmen 50, 80, 82 oder 100 abhalten lassen, um die Erwärmung des Rahmens 50, 80, 82 oder 100 möglichst gering zu halten, so dass thermische Deformationen des Rahmens 50, 80, 82 oder 100 möglichst nicht auftreten und sich somit nicht negativ auf die Spannung des Flachmaterials F auswirken.

Darüber hinaus ist das Flachmaterial F vorzugsweise ein sowohl vor Erhitzen über die Wandlungstemperatur als auch nach Erhitzen über die Wandlungstemperatur und nachfolgendem Abkühlen sich elastisch verhaltendes Flachmaterial F, so dass dieses in der Lage ist, die beim Erhitzen über die Wandlungstemperatur auftretende Spannung auch bei dem nachfolgenden Abkühlen auf die Einsatztemperatur über lange Zeit aufrecht zu erhalten, so dass ein einmaliges Erwärmen des Flachmaterials F über die Wandlungstemperatur während der Lebenszeit des jeweiligen Wind-, Licht- oder Sonnenschutzes ausreichend ist, um dessen Spannung in der Aufspannfläche AF während der Lebenszeit des Produkts zu erhalten.

## Patentansprüche

1. Windstopeinrichtung für ein Cabriofahrzeug umfassend ein Flachmaterial (F) und einen das Flachmaterial (F) aufnehmenden sowie in einer Aufspannfläche (AF) gespannt haltenden Rahmen (50, 80, 82, 100), **dadurch gekennzeichnet dass** das Flachmaterial (F) aus einem durch Erwärmen auf eine über einer Einsatztemperatur liegende Wandlungstemperatur sich in der Aufspannfläche (AF) unter Spannung setzenden Flachmaterial (F) aus Fasern (FA) mit einer Faserstruktur (FS) gebildet ist, welche beim Erwärmen auf die Wandlungstemperatur in mindestens einer in der Aufspannfläche (AF) liegenden Ausdehnungsrichtung (A1, A2) selbsttätig die Spannung erzeugt, und dass das Flachmaterial (F) ein Gewebe, Gestricke oder Gewirke aus diesen Fasern ist.

2. Windstopeinrichtung nach Anspruch 1, **dadurch gekennzeichnet, dass** die Faserstruktur (FS) Fasern (FA) mit einem Faserverlauf aufweist, der sich beim Erwärmen auf die Wandlungstemperatur ändert.

3. Windstopeinrichtung nach Ansprüche 1 oder 2, **dadurch gekennzeichnet, dass** die Faserstruktur (FS) so ausgebildet ist, dass diese in mindestens zwei in der Aufspannfläche (AF) liegenden und quer zueinander verlaufenden Ausdehnungsrichtungen (A1, A2) eine Spannung erzeugt.

4. Windstopeinrichtung nach einem der voranstehenden Ansprüche, **dadurch gekennzeichnet, dass** die Fasern (FA') aus einem vorgedehnten Material sind, das sich beim Erwärmen auf die Wandlungstemperatur kontrahiert.

5. Windstopeinrichtung nach einem der voranstehenden Ansprüche, **dadurch gekennzeichnet, dass** das Flachmaterial (F) in mindestens einer in der Aufspannfläche (AF) liegenden Ausdehnungsrichtung (A1, A2) elastisch dehnbar ist.

6. Windstopeinrichtung nach einem der voranstehenden Ansprüche, **dadurch gekennzeichnet, dass** das Flachmaterial (F) ein biegeschlaffes Flachmaterial ist.

7. Windstopeinrichtung nach einem der voranstehenden Ansprüche, **dadurch gekennzeichnet, dass** das Flachmaterial (F) aus einem sich von dem Material des Rahmens (50, 80, 82, 100) unterscheidenden Material hergestellt ist.

8. Verfahren zum Herstellen einer Windstopeinrichtung für ein Cabriofahrzeug aus einem Flachmaterial (F) und einem das Flachmaterial (F) in einer Aufspannfläche (AF) gespannt haltenden Rahmen, **dadurch gekennzeichnet, dass** das aus einem Gewebe, Gestricke oder Gewirke aus Fasern (FA) gebildete Flachmaterial (F) spannungsfrei an den Rahmen (50, 80, 82, 100) fixiert wird und durch Erwärmen der Fasern (FA) auf eine über einer Einsatztemperatur liegende Wandlungstemperatur in dem Rahmen (50, 80, 82, 100) unter Spannung gesetzt wird.

9. Verfahren nach Anspruch 8, **dadurch gekennzeichnet, dass** das Flach-material (F) nach Erreichen einer Endform des Rahmens (100) auf die Wandlungstemperatur erwärmt wird.

10. Verfahren nach Anspruch 8 oder 9, **dadurch gekennzeichnet, dass** das Flachmaterial (F) durch ein warmes Medium auf die Wandlungstemperatur erwärmt wird.

11. Verfahren nach einem der Ansprüche 8 bis 10, **dadurch gekennzeichnet, dass** das Flachmaterial (F) durch Strahlung auf die Wandlungstemperatur erwärmt wird.

12. Verfahren nach einem der Ansprüche 8 bis 11, **dadurch gekennzeichnet, dass** das Flachmaterial (F) durch eine auf dieses und nicht auf den Rahmen (100) gerichtete Erwärmung auf die Wandlungstemperatur erwärmt wird.

13. Verfahren nach einem der Ansprüche 8 bis 12, **dadurch gekennzeichnet, dass** der Rahmen (100) beim Erwärmen des Flachmaterials (F) auf die Wandlungstemperatur abgeschirmt wird.

## Claims

1. Wind stop device for a convertible vehicle comprising a flat material (F) and a frame (50, 80, 82, 100) accommodating the flat material (F) as well as holding it tensioned in a mounting surface (AF), **characterized in that** the flat material (F) is formed from a flat material (F) consisting of fibres (FA) with a fibre structure (FS), said flat material being tensioned in the mounting surface (AF) due to heating to a conversion temperature above an operating temperature, said fibre structure automatically generating the tension in at least one direction of extension (A1, A2) located in the mounting surface (AF) during heating to the conversion temperature, and that the flat material (F) is a woven or knitted material consisting of these fibres.

2. Wind stop device as defined in claim 1, **characterized in that** the fibre structure (FS) has fibres (FA) with a fibre orientation changing during heating to the conversion temperature.

3. Wind stop device as defined in claims 1 or 2, **characterized in that** the fibre structure (FS) is designed such that it generates tension in at least two directions of extension (A1, A2) located in the mounting surface (AF) and running transversely to one another.

4. Wind stop device as defined in any one of the preceding claims, **characterized in that** the fibres (FA') consist of a pre-stretched material contracting during heating to the conversion temperature.

5. Wind stop device as defined in any one of the preceding claims, **characterized in that** the flat material (F) is elastically expandable in at least one direction of extension (A1, A2) located in the mounting surface (AF).

6. Wind stop device as defined in any one of the preceding claims, **characterized in that** the flat material (F) is a slack flat material not resistant to bending.

7. Wind stop device as defined in any one of the preceding claims, **characterized in that** the flat material (F) is produced from a material differing from the material of the frame (50, 80, 82, 100).

8. Method of manufacturing a wind stop device for a convertible vehicle from a flat material (F) and a frame holding the flat material (F) tensioned in a mounting surface (AF), **characterized in that** the flat material (F) formed from a woven or knitted fabric consisting of fibres (FA) is fixed to the frame (50, 80, 82, 100) free of tension and is tensioned in the frame (50, 80, 82, 100) as a result of heating of the fibres (FA) to a conversion temperature above an operating temperature.

9. Method as defined in claim 8, **characterized in that** the flat material (F) is heated to the conversion temperature after attaining a final shape of the frame (100).

10. Method as defined in claim 8 or 9, **characterized in that** the flat material (F) is heated to the conversion temperature by a hot medium.

11. Method as defined in any one of claims 8 to 10, **characterized in that** the flat material (F) is heated to the conversion temperature by way of radiation.

12. Method as defined in any one of claims 8 to 11, **characterized in that** the flat material (F) is heated to the conversion temperature by way of heat directed onto it and not onto the frame (100).

13. Method as defined in any one of claims 8 to 12, **characterized in that** the frame (100) is shielded during heating of the flat material (F) to the conversion temperature.

## Revendications

1. Dispositif de protection contre le vent pour un véhicule cabriolet, comprenant un matériau plat (F) et un cadre (50, 80, 82, 100) de réception du matériau plat (F) qui maintient celui-ci serré dans une surface de serrage (AF), **caractérisé en ce que** le matériau plat (F) est formé par un matériau plat (F) en fibres (FA) avec une structure fibreuse (FS), se mettant en place sous contrainte dans la surface de serrage (AF) par chauffage à une température de gauchissement supérieure à la température d'insertion, ladite structure fibreuse générant automatiquement la contrainte par chauffage à la température de gauchissement dans au moins une direction de dilatation (A1, A2) située dans la surface de serrage (AF), et **en ce que** le matériau plat (F) est un tissu, un tricot ou un maillage desdites fibres.

2. Dispositif de protection contre le vent selon la revendication 1, **caractérisé en ce que** la structure fibreuse (FS) comporte des fibres (FA) avec un tracé qui varie lors du chauffage à la température de gauchissement.

3. Dispositif de protection contre le vent selon la revendication 1 ou 2, **caractérisé en ce que** la structure fibreuse (FS) est réalisée de manière à générer une contrainte dans au moins deux directions de dilatation (A1, A2) situées dans la surface de serrage (AF) et s'étendant transversalement l'une à l'autre.

4. Dispositif de protection contre le vent selon l'une des revendications précédentes, **caractérisé en ce que** les fibres (FA') sont en matériau pré-étiré qui se contracte lors du chauffage à la température de gauchissement.

5. Dispositif de protection contre le vent selon l'une des revendications précédentes, **caractérisé en ce que** le matériau plat (F) est élastiquement extensible dans au moins une direction de dilatation (A1, A2) située dans la surface de serrage (AF).

6. Dispositif de protection contre le vent selon l'une des revendications précédentes, **caractérisé en ce que** le matériau plat (F) est un matériau plat flexible.

7. Dispositif de protection contre le vent selon l'une des revendications précédentes, **caractérisé en ce que** le matériau plat (F) est fabriqué dans un matériau différent du matériau du cadre (50, 80, 82, 100).

8. Procédé de fabrication d'un dispositif de protection contre le vent pour un véhicule cabriolet, comprenant un matériau plat (F) et un cadre de réception du matériau plat (F) qui maintient celui-ci serré dans une surface de serrage (AF), **caractérisé en ce que** le matériau plat (F) constitué d'un tissu, d'un tricot ou d'un maillage de fibres (FA) est fixé sans contrainte sur le cadre (50, 80, 82, 100) et mis en place dans le cadre (50, 80, 82, 100) sous contrainte par chauffage des fibres (FA) à une température de gauchissement supérieure à la température d'insertion.

9. Procédé selon la revendication 8, **caractérisé en ce que** le matériau plat (F) est chauffé à la température de gauchissement après avoir obtenu une forme finale du cadre (100).

10. Procédé selon la revendication 8 ou 9, **caractérisé en ce que** le matériau plat (F) est chauffé par un agent chaud à la température de gauchissement.

11. Procédé selon l'une des revendications 8 à 10, **caractérisé en ce que** le matériau plat (F) est chauffé par rayonnement à la température de gauchissement.

12. Procédé selon l'une des revendications 8 à 11, **caractérisé en ce que** le matériau plat (F) est chauffé à la température de gauchissement par une chaleur dirigée vers lui et non vers le cadre (100).

13. Procédé selon l'une des revendications 8 à 12, **caractérisé en ce que** le cadre (100) est protégé lors du chauffage du matériau plat (F) à la température de gauchissement.
